(19) Europäisches Patentamt
European Patent Office
Office européen des brevets

(11) **EP 4 086 313 A1**

(12) **EUROPÄISCHE PATENTANMELDUNG**

(43) Veröffentlichungstag:
**09.11.2022 Patentblatt 2022/45**

(21) Anmeldenummer: **21172034.7**

(22) Anmeldetag: **04.05.2021**

(51) Internationale Patentklassifikation (IPC):
*C09D 5/02* (2006.01)     *C09D 167/08* (2006.01)

(52) Gemeinsame Patentklassifikation (CPC):
(C-Sets verfügbar)
**C09D 5/02; C09D 167/08**     (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **DAW SE**
**64372 Ober-Ramstadt (DE)**

(72) Erfinder:
• **BRENNER, Thomas**
**64367 Mühltal (DE)**

• **BEFURT, Uwe**
**64372 Ober-Ramstadt (DE)**
• **WINGENDER, Patrick**
**64380 Roßdorf (DE)**
• **RICHTER, Maike**
**64372 Ober-Ramstadt (DE)**

(74) Vertreter: **Metten, Karl-Heinz**
**Boehmert & Boehmert**
**Anwaltspartnerschaft mbB**
**Pettenkoferstrasse 22**
**80336 München (DE)**

(54) **WÄSSRIGER BESCHICHTUNGSSTOFF, BESCHICHTUNG ERHALTEN AUS DEM BESCHICHTUNGSSTOFF SOWIE SUBSTRAT ENTHALTEND DIE BESCHICHTUNG**

(57) Die vorliegende Erfindung betrifft einen wässrigen Beschichtungsstoff, umfassend einen Füllstoff und/oder ein Pigment, ein Dispergiermittel, ein Alkydharz-Bindemittel, ein Additiv und Wasser. Ferner betrifft die Erfindung eine Beschichtung, erhalten aus dem erfindungsgemäßen Beschichtungsstoff sowie ein Substrat enthaltend eine beschichtbare Oberfläche und auf dieser beschichtbaren Oberfläche die erfindungsgemäße Beschichtung. Außerdem betrifft die Erfindung die Verwendung des erfindungsgemäßen wässrigen Beschichtungsstoffs für die Beschichtung oder Renovierung von Flächen im Innen- und/oder Außenbereich.

EP 4 086 313 A1

(52) Gemeinsame Patentklassifikation (CPC): (Forts.)

C-Sets
**C09D 167/08, C08K 3/013**

**Beschreibung**

Die vorliegende Erfindung beschreibt einen wässrigen Beschichtungsstoff, insbesondere Putzmasse, Grundierungsmasse, Spachtelmasse oder Anstrichfarbe. Ferner betrifft die Erfindung eine Beschichtung, erhalten oder erhältlich aus dem erfindungsgemäßen Beschichtungsstoff sowie ein Substrat enthaltend eine beschichtbare Oberfläche und auf dieser beschichtbaren Oberfläche eine erfindungsgemäße Beschichtung.

Beschichtungsmassen für Wände und Decken sind regelmäßig mit einem polymeren organischen Bindemittel ausgestattet. Derartige polymere organische Bindemittel gehen bislang im Allgemeinen auf fossile Rohstoffe wie Erdöl und Erdgas zurück.

Aus Gründen der Nachhaltigkeit und des Klimaschutzes verlangt der Markt verstärkt nach Bindemitteln aus nachwachsenden Rohstoffen, ohne dabei jedoch in Konkurrenz zur Nahrungsmittelproduktion zu treten. Häufig wird als weitere Anforderung an den Einsatz nachwachsender Rohstoffe gestellt, dass diese nicht auf Monokulturen zurückgehen, da letztere nicht selten die Biodiversität negativ beeinflussen.

Daher hat der vorliegenden Erfindung die Aufgabe zugrunde gelegen, Anstrichfarben zur Verfügung zu stellen, die nicht mehr auf Bindemittel, die auf fossilen Rohstoffen wie Erdöl basieren, angewiesen sind, gleichwohl unter wirtschaftlich akzeptablen Bedingungen zugänglich sind und Anstrichfarben liefern, die in Ihrem Eigenschaftsprofil im Wesentlichen dem herkömmlicher Anstrichfarben entsprechen, d.h. solchen die, Bindemittel, die auf fossilen Rohstoffen wie Erdöl basieren, einsetzen.

Demgemäß wurde ein wässriger Beschichtungsstoff gefunden, bestehend aus oder umfassend, insbesondere umfassend,

   a) mindestens einen Füllstoff und/oder mindestens ein Pigment,

   b) mindestens ein Dispergiermittel,

   c) mindestens ein Alkydharz-Bindemittel, bevorzugt auf Basis von Leindotteröl und/oder Leinöl und besonders bevorzugt auf Basis von Leindotteröl,

   d) mindestens ein Additiv und

   e) Wasser.

Der erfindungsgemäße wässrige Beschichtungsstoff stellt bevorzugt eine Putzmasse, eine Grundierungsmasse, eine Spachtelmasse oder eine Anstrichfarbe dar. Die erfindungsgemäßen wässrigen Beschichtungsstoffe verfügen in zweckmäßigen Ausgestaltungen über einen pH-Wert im Bereich von 7,5 bis 12,5, bevorzugt im Bereich von 8,5 bis 12,5, besonders bevorzugt im Bereich von 9,5 bis 12,0 und insbesondere im Bereich von 10,5 bis 12,0, jeweils ermittelt gemäß DIN 55659-1:2012-1 bei einer Temperatur von 23 ± 2 °C. Hierfür können pH-Elektroden mit Glasmembran verwendet werden. Ein geeignetes pH-Meter ist zum Beispiel das Messgerät SevenEasy (Messbereich pH 0,00-14,00) der Firma Mettler Toledo unter Verwendung der Elektrode InLab ExpertPro (Best.-Nr.: 51343101), ebenfalls von der Firma Mettler Toledo. Für die Einstellung des pH-Werts kann auf sogenannte pH-Einstellmittel zurückgegriffen werden. Geeignete pH-Einstellenmittel umfassen zum Beispiel Alkalihydroxide wie Natriumhydroxid, beispielsweise in Form von Natronlauge, und/oder Kaliumhydroxid wie auch flüchtige Neutralisationsmittel wie eine Ammoniaklösung und/oder Amine wie 2-Amino-2-methyl-1-propanol und/oder 2-Amino-2-ethyl-1,3-propandiol. In einer besonders zweckmäßigen Ausgestaltung sind die erfindungsgemäßen wässrigen Beschichtungsstoffe, die über einen pH-Wert Bereich von 7,5 bis 12,5, bevorzugt im Bereich von 8,5 bis 12,5, besonders bevorzugt im Bereich von 9,5 bis 12,0 und insbesondere im Bereich von 10,5 bis 12,0, verfügen, im Wesentlichen frei, insbesondere frei, von organischen Topfkonservierungsmitteln, insbesondere organischen Bioziden.

Die erfindungsgemäßen Beschichtungsstoffe können ferner ausgestattet sein mit mindestens einem Alkylalkoxysilan, Alkylalkoxysiloxan und/oder Alkylsilikonat (Komponente f)), wobei Alkylsilikonate, insbesondere wasserlösliche Alkylsilikonate, bevorzugt sind. Besonders geeignet ist dabei Kaliummethylsilikonat.

Alternativ oder insbesondere zusätzlich verfügen die erfindungsgemäßen wässrigen Beschichtungsstoffe über Wasserglas und/oder Kieselsol (Komponente g)), insbesondere Wasserglas, bevorzugt Wasserglas und kein Kieselsol.

Wasserglas kann z.B. durch Reaktion von Alkalikarbonat und/oder Alkalihydroxyd mit Quarzsand erhalten werden. Es liegt üblicherweise in Form wässriger Lösungen vor. Diese können über unterschiedliche Konzentrationen verfügen. Kieselsole liegen regelmäßig in Form wässriger Suspensionen vor. In zweckmäßigen Ausgestaltungen wird auf Natrium-, Kalium- und/oder Lithiumwasserglas zurückgegriffen, wobei Kalium- und Lithiumwasserglas bevorzugt sind. Stellen die erfindungsgemäßen wässrigen Beschichtungsstoffe Anstrichfarben, Spachtelmassen oder Grundierungsmassen dar, verwendet man bevorzugt Kaliumwasserglas, während für wässrige Beschichtungsstoffe in Form von Putzmassen auf Lithiumwasserglas zurückgegriffen wird.

Außerdem können die erfindungsgemäßen wässrigen Beschichtungsstoffe alternativ sowie insbesondere zusätzlich mindestens ein organisches und/oder anorganisches Fasermaterial (Komponente h)) aufweisen. Als geeignete Fasermaterialien kommen anorganische Fasermaterialien, zum Beispiel Glasfasern, E-Glasfasern, Steinwollfasern und/oder Basaltfasern, bevorzugt Glasfasern, und/ oder organische Fasermaterialien, zum Beispiel Acrylfasern, Cellulosefasern, Polypropylenfasern, Polyethylenfasern, Polyacrylnitilfasern, Polyamidfasern und/oder Carbonfasern, sowie deren beliebige Mischungen in Betracht. Besonders bevorzugt werden in einer erfindungsgemäßen Ausführungsform Acrylfasern und/ oder Cellulosefasern verwandt.

Geeignete Füllstoffe umfassen carbonatische Füllstoffe, silikatische Füllstoffe, synthetische Füllstoffe, sulfatische Füllstoffe, insbesondere Calciumaluminiumsulfate, sowie deren beliebige Mischungen.

Als carbonatische Füllstoffe kommen sowohl nicht gefällte carbonatische Füllstoffe wie auch gefällte carbonatische Füllstoffe, insbesondere gefälltes Calciumcarbonat, auch PCC genannt, wie auch beliebige Mischungen hiervon in Betracht.

Unter den nicht gefällten carbonatischen Füllstoffen kommen insbesondere Calciumcarbonat, Dolomit, Calcite, Aragonite und beliebigen Mischungen dieser Füllstoffe in Betracht, wobei Calciumcarbonat bevorzugt ist.

Zweckmäßige silikatische Füllstoffe können ausgewählt werden aus der Gruppe bestehend aus Quarziten, Schichtsilikaten, Feldspaten, insbesondere Albit, Cristobalit, Vulkaniten, Talkum, Kieselerden, insbesondere Kaolin, Vollkörperglaskugeln und beliebigen Mischungen hiervon. Besonders bevorzugt wird unter den silikatischen Füllstoffen auf Calcium-Silikate enthaltend Hydroxidionen zurückgegriffen, insbesondere auf Xonotlit. Xonotlit kann dabei natürlichen Ursprungs sein, kann aber auch synthetisch erhalten werden.

Geeignete synthetische Füllstoffe umfassen z.B. Polymerhohlkugeln, insbesondere Acrylathohlkugeln, wobei diese synthetischen Füllstoffe in Abhängigkeit vom Schüttgewicht auch Leichtfüllstoffe im Sinne der Erfindung sein können.

Geeignete synthetische Füllstoffe umfassen ferner polymere Vollkörperkugeln, insbesondere aus Polyethylen oder Polypropylen. Durch den Einsatz von polymeren Vollkörperkugeln kann im Allgemeinen die Abrieb- und Kratzfestigkeit der aus den erfindungsgemäßen wässrigen Beschichtungsstoffen erhaltenen Beschichtungen erhöht werden. Polymere Vollkörperkugeln verfügen im Sinne der vorliegenden Erfindung in der Regel über eine Partikelgröße oberhalb von 250 $\mu$m.

Als synthetischer Füllstoff kann außerdem zurückgegriffen werden auf Kunststoffmehl, z.B. in transparenter, weißer oder bunt eingefärbter Form. Als Kunststoffmehl werden regelmäßig Materialien eingesetzt, die ausgewählt sind aus der Gruppe bestehend aus Polyethylen, Polyamid, Polyacrylnitril, Polypropylen, Polyethylenterephthalat, Polystyrol, Polyurethan, Polyacrylat, Gummi, deren Copolymeren, Blends und Polymerlegierungen, wobei Polyethylen und Polypropylen im Allgemeinen bevorzugt sind. Ebenso ist es möglich, dass das Kunststoffmehl aus einer Mischung der zuvor genannten Materialien besteht. Geeignete Kunststoffmehle verfügen vorzugsweise über eine Partikelgröße im Bereich von 1 bis 250 $\mu$m. Für Spritzapplikation greift man bevorzugt auf Kunststoffmehl mit einer Partikelgröße im Bereich bis 100 $\mu$m zurück. Kunststoffmehle können z.B. in Mengen von 3 bis 15 Gew.-%, bezogen auf das Gesamtgewicht des Beschichtungsstoffs, eingesetzt werden. Sie erhöhen regelmäßig die mechanische Belastbarkeit der erhaltenen Beschichtungen und führen dabei häufig zu einer kratzfesteren Beschichtung.

In einer besonders geeigneten Ausführungsform enthalten die erfindungsgemäßen wässrigen Beschichtungsstoffe als Füllstoff bzw. Füllstoffkomponente Calciumaluminiumsulfate. Unter diesen ist Ettringit besonders bevorzugt.

Der erfindungsgemäße wässrige Beschichtungsstoff kann ferner in einer vorteilhaften Ausführungsform Leichtfüllstoffe enthalten.

Leichtfüllstoffe im Sinne der vorliegenden Erfindung sind organische und anorganische Füllstoffe mit einer Schüttdichte, bestimmt gemäß DIN ISO 697:1984-01, von weniger als 600 kg/m$^3$, insbesondere weniger als 500 kg/m$^3$, z.B. im Bereich von 120 bis 600 kg/m$^3$. Die Schüttdichte berechnet sich dabei regelmäßig aus dem Quotienten aus der Masse und dem eingenommenen Volumen, das Zwischenräume und mögliche Hohlräume durch Poren einschließt. Geeignete Leichtfüllstoffe können ausgewählt werden aus der Gruppe bestehend aus expandiertem Vulkangestein, insbesondere Perlite, Mineralhohlkugeln, insbesondere Silikathohlkugeln, vorzugsweise Alumosilikathohlkugeln, aufgeschäumtem Glas, insbesondere Blähglas und/oder Blähglasgranulat, Glasbubbles, Blähton, Blähschiefer, Glasbeton, porösem Vulkangestein, insbesondere Bims, Flugasche, Kesselsand, geblähtem Vermiculit, expandierten Aluminiumsilikaten, amorphen Aluminiumsilikaten, Korkpartikeln, sphärischen EPS-Partikeln und beliebigen Mischungen der genannten Leichtfüllstoffe. Füllstoffe im Sinne der vorliegenden Erfindung sind demgemäß keine Leichtfüllstoffe im Sinne der vorliegenden Erfindung und verfügen daher regelmäßig über eine Schüttdichte von mindestens 600 kg/m$^3$.

In besonders bevorzugten Ausführungsformen der erfindungsgemäßen wässrigen Beschichtungsstoffe kommen als Dispergiermittel Polycarboxylatsalze, bevorzugt Natriumpolycarboxylatsalze, zum Einsatz. Hierbei kann insbesondere auch zurückgegriffen werden auf Maleinsäure- und/oder Maleinsäureanhydrid-Copolymere in Salzform, bevorzugt Maleinsäure/Diisobuten-Copolyme in Salzform, wobei die Kalium- und Natriumsalze bevorzugt sind. Geeignete Dispergiermittel umfassen ferner Aminoalkohole. Unter Letzteren sind 2-Amino-2-methyl-1-propanol, 2-Amino-2-methylpropanol, 2-Amino-2-ethyl-1,3-propan-diol, 2-Methylamino-2-methyl-1-propanol, N,N,N',N'-Tetrakis(2-hydroxypropyl)-ethylendiamin bevorzugt, wobei auch deren Mischungen eingesetzt werden können. Unter den Aminoalkoholen wird bevorzugt auf 2-Amino-2-methyl-1-propanol, 2-Amino-2-ethyl-1,3-pro-pandiol und/oder N,N,N',N'-Tetrakis(2-hydroxypropyl)-ethylendiamin zurückgegriffen. Ferner kann als geeignete Dispergiermittel zurückgegriffen werden auf Polyhydroxyamine, wobei Polyhydroxyamine, bei denen die Polyhydroxy-Einheit auf einer Hexose basiert, bevorzugt sind. Außerdem können als geeignete Dispergiermittel Polyhydroxyamine verwendet werden. Diese umfassen in zweckmäßigen Ausgestaltungen Alkylglukamine, insbesondere tertiäre Alkylglukamine wie Dimethylglukamin, Hydroxyethyl- und Hydroxypropyl-N-Methylglukamin sowie deren Mischungen. Selbstverständlich können auch beliebige Mischungen an Polyhydroxyaminen, insbesondere den vorangehend spezifizierten bevorzugten Polyhydroxyaminen, und 2-Amino-2-methyl-1-propanol, 2-Amino-2-ethyl-1,3-propandiol und/oder N,N,N',N'-Tetrakis(2-hydroxypropyl)-ethylendiamin eingesetzt werden.

Als Dispergiermittel kommen im Sinne der Erfindung regelmäßig solche Substanzen in Betracht, die die festen partikulären Bestandteile, insbesondere Pigmente, in einem noch nicht ausgehärteten bzw. verfestigten erfindungsgemäßen wässrigen Beschichtungsstoff in kannt, verhindern bzw. zurückdrängen.

Der Alkydharz des mindestens einen Alkydharz-Bindemittels enthält bevorzugt 15 bis 50 Gew.-%, insbesondere 20 bis 43 Gew.-%, einfach ungesättigte Fettsäuren und 40 bis 75 Gew.-%, insbesondere 47 bis 70 Gew.-%, mehrfach ungesättigte Fettsäuren sowie gegebenenfalls 3 bis 15 Gew.-%, insbesondere 6 bis 12 Gew.-%, gesättigte Fettsäuren, jeweils bezogen auf das Gesamtgewicht an gesättigten und ungesättigten Fettsäuren des Alkydharzes, enthält.

Für die Herstellung der Alkyharze greift man bevorzugt auf Leindotteröl und/oder Leinöl zurück. Leindotteröl kann durch Verpressen des von der Leindotterpflanze produzierten Saatguts in einer Ölmühle gewonnen werden. Dass bei diesem Vorgang erhaltene Leindotteröl enthält regelmäßig Ölsäure, Linolsäure und Linolensäure. Leinöl kann durch Kalt- oder Heißverpressen, der getrockneten Samen des Flachs, auch Leinsamen genannt, erhalten werden. Am schonensten ist die Kaltverpressung, insbesondere unter Sauerstoffausschluss.

Bei dem Alkydharz im Sinne der Erfindung handelt es sich um einen Polyester auf der Basis der Fettsäuren des Leindotteröls, wobei als kettenbildende Elemente Polyole, insbesondere Glycerin, und Phthalsäureanhydrid zum Einsatz kommen können. Die die Alkydharze bildenden Komponenten umfassen demgemäß mehrwertige Alkohole, insbesondere Glycerin, mehrprotonige Säuren, insbesondere Phthalsäure, Phthalsäureanhydrid und/oder Isophthalsäure, und ungesättigte Fettsäuren sowie gegebenenfalls auch gesättigte Fettsäuren. Als Quelle für ungesättigte Fettsäuren wird für die erfindungsgemäßen wässrigen Beschichtungsstoffe auf Leindotteröl und/oder Leinöl, insbesondere auf Leindotteröl, zurückgegriffen.

Bevorzugt stellt das Alkydharz des Alkydharz-Bindemittels ein mittel- oder langöliges Alkydharz, insbesondere langöliges Alkydharz, dar. Bevorzugt basiert der Langölanteil bei dem langöligen Alkydharz auf Linolsäure, Linolensäure und/oder, insbesondere und, Ölsäure sowie gegebenenfalls Palmitin- und/oder Stearingsäure. Besonders bevorzugt basiert der Langölanteil bei dem langöligen Alkydharz auf Linolsäure, Linolensäure, Gondosäure und Ölsäure sowie gegebenenfalls Palmitin- und/oder Stearingsäure. Unter einem langöligen Alkydharz sollen im Sinne der vorliegenden Erfindung solche langöligen Systeme verstanden werden, die einen Ölgehalt oberhalb von 60 % aufweisen. Für mittelölige Alkydharze liegt der Ölgehalt regelmäßig im Bereich von 40 bis 60 %. Unter dem Ölgehalt soll hierbei in Bezug auf das Gesamtgewicht des Alkdyharzes der gewichtsprozentige Anteil derjenigen Fettsäuren, einschließlich Polyolrest verstanden werden, die mit den Hydroxylgruppen der Polyoleinheiten im Alkydharz verbunden vorliegen. Die Begriffe "Ölgehalt" und "Öllänge" werden hierbei häufig synonym verwandt.

Als Additive können grundsätzlich herkömmliche Additive, wie sie für wässrige Beschichtungsstoffe zum Einsatz kommen, eingesetzt werden. Exemplarisch können geeignete Additive ausgewählt sein aus der Gruppe bestehend aus Netzmitteln, Entschäumern, Rheologieadditive, insbesondere Verdicker, Stabilisatoren, Hydrophobierungsmitteln, Mattierungsmitteln, insbesondere Fällungskieselsäure, Schichtsilikaten, thixotropen Alkydharzen, Oberflächenadditiven, insbesondere Silikonoberflächenadditiven, beispielsweise polyethermodifiziertes Polymethylalkylsiloxan und/oder Silikonpolyether-Copolymere, Puffersubstanzen, pH-Einstellmittel und Mischungen dieser Verbindungen.

Das Rheologieadditiv kann insbesondere ausgewählt werden aus der Gruppe bestehend aus Polyacrylat-Verdickern, Polyurethan-Verdickern, Polyharnstoff-Verdickern, Polyvinylalkohol-Verdickern, Polyetherpolyol-Verdickern, organisch modifizierten Schichtsilikat-Verdickern, nicht organisch modifizierten Schichtsilikat-Verdickern, Stärkeether-Verdickern, Cellulose-Verdickem, z.B. Celluloseether-Verdickern, Polysaccharid-Verdickern, bevorzugt Xanthan und/oder Agar Agar, Fettalkoholethoxylat-Verdickern und beliebigen Mischungen hiervon. Bevorzugt wird auf Celluloseether-Verdicker zurückgegriffen, wobei hydrophob modifizierte Celluloseether-Verdicker wie hydrophob modifizierte Hydroxycelluloseether besonders bevorzugt sind. Rheologieadditive, insbesondere Verdicker, liegen in den erfindungsgemäßen wässrigen Beschichtungsstoffen regelmäßig in einer Menge im Bereich von 0 bis 4 Gew.-% und bevorzugt im Bereich von 0,01 bis 2 Gew.-% vor.

Die erfindungsgemäßen wässrigen Beschichtungsstoffe enthalten als Additive vorzugsweise mindestens einen Verdicker und/oder einen Entschäumer und/oder ein Netzmittel und/oder ein Hydrophobierungsmittel. Besonders bevorzugt liegen in den erfindungsgemäßen wässrigen Beschichtungsstoffen Verdicker, Entschäumer und Netzmittel oder Verdicker, Entschäumer, Netzmittel und Hydrophobierungsmittel.

In Abgrenzung von Dispergiermitteln, bei denen es sich im Allgemeinen um gegen Flokkulation stabilisierende oligomere und polymere Verbindungen handelt, stellen Netzmitteln regelmäßig niedrigmolekulare, amphiphile Substanzen dar. Geeignete Netzmittel können demgemäß niedrigmolekulare, d.h. nicht-oligomere und nicht polymere Tenside umfassen, beispielsweise ethoxylierte Fettalkohole, Fettalkoholsulfate oder Alkylphosphonate.

Des Weiteren können die erfindungsgemäßen wässrigen Beschichtungsstoffe alternativ sowie insbesondere zusätzlich mindestens ein polymeres organisches Bindemittel, insbesondere auf Dispersionsbasis, (Komponente j)) aufweisen.

Für das polymere organische Bindemittel auf Dispersionsbasis kommen vorzugsweise Vinylacetat/Ethylen-Copolymere, Copolymere auf Basis von Vinylaromaten, insbesondere gebildet aus Styrol und (Meth)acrylaten, Copolymere auf Basis von Acrylaten und gegebenenfalls Methacrylaten, insbesondere Reinacrylate, oder Hybridbindemittel, insbesondere in Form wässriger Organosilikat-Hybriddispersionen, sowie beliebige Mischungen dieser Bindemittel in Frage.

Bei Acrylat-basierten polymeren organischen Bindemitteln auf Dispersionsbasis kommen mindestens als Monomer bzw. Comonome bevorzugt Acrylsäureester, Methacrylsäurester, Acryl-äure und/oder Methacrylsäure zum Einsatz, wobei in einer zweckmäßigen Ausgestaltung das in Wasser dispergierte oder dispergierbare polymere organische Bindemittel auf i) Acrylsäureestern und Vinylaromaten oder auf ii) Acrylsäureestern und Vinylestern mindestens einer Koch-Säure, insbesondere der Versatinsäure, und gegebenenfalls Vinylaromaten, insbesondere Styrol, basiert. Geeignete Acrylat-basierte Bindemittel umfassen z.B. Copolymere auf Basis von Vinylaromaten, insbesondere Styrol, und Acrylaten. Ferner kann auch auf Reinacrylate zurückgegriffen werden. Reinacrylate umfassen regelmäßig Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Geeignete Reinacrylate können demgemäß ausgewählt sein aus der Gruppe bestehend aus Homopolymeren gebildet (Meth)acrylaten, Copolymeren gebildet aus (Meth)acrylaten, Copolymeren gebildet aus (Meth)acrylaten und (Meth)acrylsäure und deren Mischungen. Das polymere organische Bindemittel wird in einer besonders zweckmäßigen Ausgestaltung in Form einer wässrigen Bindemitteldispersion eingesetzt.

Unter den erfindungsgemäßen wässrigen Beschichtungsstoffen sind diejenigen, die polymere organische Bindemittel enthalten, besonders bevorzugt, bei denen diese polymeren organischen Bindemittel Copolymere auf Basis von Vinylaromaten, insbesondere gebildet aus Styrol und (Meth)acrylaten, bevorzugt Styrol und Acrylaten, besonders bevorzugt Styrol und Butylacrylaten, darstellen und die zusätzlich Wasserglas und/oder Kieselsol, insbesondere Wasserglas, als anorganisches Bindemittel enthalten. Ferner sind unter den erfindungsgemäßen wässrigen Beschichtungsstoffen diejenigen, die polymere organische Bindemittel enthalten, besonders bevorzugt, bei denen diese polymeren organischen Bindemittel Vinylacetat/Ethylen-Copolymere oder Copolymere auf Basis von Acrylaten und gegebenenfalls Methacrylaten, insbesondere Reinacrylate, darstellen und die kein Wasserglas und/oder Kieselsol, insbesondere kein Wasserglas und kein Kieselsol als anorganisches Bindemittel enthalten.

Unter den erfindungsgemäßen wässrigen Beschichtungsstoffen sind diejenigen, die kein Wasserglas und/oder Kieselsol, insbesondere kein Wasserglas und kein Kieselsol als anorganisches Bindemittel enthalten, besonders bevorzugt, die Calcium-Silikate enthaltend Hydroxidionen, insbesondere Xonotlit, und/oder, insbesondere und, die Calciumaluminiumsulfate, insbesondere Ettringit, enthalten. Calcium-Silikate enthaltend Hydroxidionen, insbesondere Xonotlit, und/oder, insbesondere und, Calciumaluminiumsulfate, insbesondere Ettringit, liegen in den erfindungsgemäßen Beschichtungsstoffen, insbesondere in den vorangehend geschilderten Beschichtungsstoffen, in einer Menge im Bereich von 1,0 bis 10 Gew.-%, bevorzugt 2 bis 6 Gew.-%, vor. Die erfindungsgemäßen wässrigen Beschichtungsstoffe, wie in diesem Absatz geschildert, weisen vorzugsweise einen pH-Wert im Bereich von 7,5 bis 12,5, bevorzugt im Bereich von 8,5 bis 12,5, besonders bevorzugt im Bereich von 9,5 bis 12,0 und insbesondere im Bereich von 10,5 bis 12,0, auf oder sind auf einen solchen pH-Wert eingestellt.

Calcium-Silikate enthaltend Hydroxidionen, insbesondere Xonotlit, und auch Calciumaluminiumsulfate, insbesondere Ettringit, können als Feststoff oder als wässriger Slurry bei der Herstellung der erfindungsgemäßen wässrigen Beschichtungsstoffe eingesetzt werden.

Solche erfindungsgemäßen wässrigen Beschichtungsstoffe sind besonders bevorzugt, die ohne das polymere organische Bindemittel auskommen. Dies trifft insbesondere auf erfindungsgemäße Anstrichfarben zu.

Exemplarisch seien als geeignete Pigmente anorganische Pigmente wie Bunt-, Schwarz- und Weißpigmente (Farbpigmente) sowie Glanzpigmente und organische Pigmente wie Bunt- und Schwarzpigmente genannt.

Als geeignete anorganische Weißpigmente kommen zum Beispiel Titandioxid, Zinkweiß, Farbenzinkoxid; Zinksulfid und/oder Lithopone in Betracht. Unter den anorganischen Schwarzpigmenten kann zum Beispiel ausgewählt werden unter Eisenoxidschwarz, Eisen-Mangan-Schwarz, Spinellschwarz und/oder Ruß.

Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat.

Besonders geeignete Pigmente umfassen zum Beispiel Titandioxid, Zinksulfid, Zinkoxid, Baryt, Ruß, Eisenoxid, Chromoxid, Kobaltblau, Spinellpigment, Nickeltitanat, Chromtitanat und deren beliebige Mischungen.

Als geeignete organischen Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente.

Geeignete organische Pigmente können hierbei z.B. ausgewählt werden aus der Gruppe bestehend aus Monoazopigmenten, insbesondere C.I. Pigment Braun 25, C.I. Pigment Orange 5, 13, 38, oder 64, C.I. Pigment Rot 1, 2, 3, 4, 5, 8, 9, 12, 17, 22, 23, 31, 48: 1, 48: 2, 48: 3, 49, 51: 1, 52: 1, 52: 2, 53, 53: 1, 53: 3, 57: 1, 58: 2, 58: 4, 112, 146, 148, 170, 175, 184, 185, 187, 191: 1, 208, 210, 245, 247 und/oder 251, C.I. Pigment Gelb 1, 3, 62, 73, 120, 151, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16, 17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109, 139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange 43, und/oder C.I. Pigment Rot 194, Perylenpigmenten, insbesondere C.I. Pigment Schwarz 31 und/oder C.I. Pigment Schwarz 32, C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

In einer weiteren bevorzugten Ausgestaltung enthält der erfindungsgemäße Beschichtungsstoff

1 bis 70 Gew.-%, bevorzugt 3 bis 65 Gew.-%, an dem mindestens einen Füllstoff und/oder Pigment (Komponente a)),

0,05 bis 2 Gew.-%, bevorzugt 0,1 bis 1 Gew.-%, an dem mindestens einen Dispergiermittel (Komponente b)),

0,5 bis 20 Gew.-%, bevorzugt 1 bis 15 Gew.-%, an Alkydharz-Bindemittel, insbesondere auf Basis von Leindotteröl (Feststoffanteil) (Komponente c)),

0,01 bis 5 Gew.-%, bevorzugt 0,1 bis 4 Gew.-%, an dem mindestens einen Additiv (Komponente d)),

10 bis 60 Gew.-%, bevorzugt 12 bis 50 Gew.-%, an Wasser (Komponente e)),

0 bis 6 Gew.-%, bevorzugt 0,02 bis 4 Gew.-%, an dem mindestens einen Alkylalkoxysilan, Alkylalkoxysiloxan und/oder Alkylsilikonat (Komponente f)),

0 bis 10,0 Gew.-%, bevorzugt 0,05 bis 6,0 Gew.-%, an Wasserglas und/oder, insbesondere und, Kieselsol (Komponente g)),

0 bis 7 Gew.-%, bevorzugt 0,1 bis 2,5 Gew.-%, an dem mindestens einen Fasermaterial (Komponente h)),

0 bis 15 Gew.-%, bevorzugt 0,25 bis 10 Gew.-%, an dem mindestens einen Leichtfüllstoff (Komponente i)) und/oder, insbesondere und,

0 bis 15 Gew.-%, bevorzugt 0,5 bis 10 Gew.-%, an dem mindestens einen polymeren organischen Bindemittel (Komponente j),

wobei die den wässrigen Beschichtungsstoff bildenden Komponenten sich stets zu 100,0 Gew.-% ergänzen.

In einer besonders bevorzugten Ausgestaltung enthält der erfindungsgemäße Beschichtungsstoff

3 bis 65 Gew.-% an dem mindestens einen Füllstoff und/oder, insbesondere und, Pigment (Komponente a)),

0,1 bis 1 Gew.-% an dem mindestens einen Dispergiermittel (Komponente b)),

1 bis 15 Gew.-% an Alkydharz-Bindemittel, insbesondere auf Basis von Leindotteröl (Feststoffanteil) (Komponente c)),

0,1 bis 4 Gew.-% an dem mindestens einen Additiv (Komponente d)),

12 bis 50 Gew.-% an Wasser (Komponente e)),

0,02 bis 4 Gew.-% an dem mindestens einen Alkylalkoxysilan, Alkylalkoxysiloxan und/oder Alkylsilikonat (Komponente f)),

0 bis 6,0 Gew.-%, bevorzugt 0,05 bis 6,0 Gew.-%, an Wasserglas und/oder, insbesondere und, Kieselsol (Komponente g)),

0 bis 2,5 Gew.-%, bevorzugt 0,1 bis 2,5 Gew.-%, an dem mindestens einen Fasermaterial (Komponente h)),

0 bis 10 Gew.-%, bevorzugt 0,25 bis 10 Gew.-%, an dem mindestens einen Leichtfüllstoff (Komponente i)) und/oder, insbesondere und,

0,5 bis 10 Gew.-%, an dem mindestens einen polymeren organischen Bindemittel (Komponente j),

wobei die den wässrigen Beschichtungsstoff bildenden Komponenten sich stets zu 100,0 Gew.-% ergänzen.

In einer besonders bevorzugten Ausgestaltung enthält der erfindungsgemäße Putzbeschichtungsstoff (auch "Putzmasse" genannt)

3 bis 65 Gew.-% an dem mindestens einen Füllstoff und/oder, insbesondere und, Pigment (Komponente a)),

0,1 bis 1 Gew.-% an dem mindestens einen Dispergiermittel (Komponente b)),

1 bis 15 Gew.-% an Alkydharz-Bindemittel auf Basis von Leindotteröl (Feststoffanteil) (Komponente c)),

0,1 bis 4 Gew.-% an dem mindestens einen Additiv (Komponente d)),

12 bis 50 Gew.-% an Wasser (Komponente e)),

0,02 bis 4 Gew.-% an dem mindestens einen Alkylalkoxysilan, Alkylalkoxysiloxan und/oder Alkylsilikonat (Komponente f)),

0,05 bis 6,0 Gew.-% an Wasserglas oder Kieselsol (Komponente g)),

0,1 bis 2,5 Gew.-% an dem mindestens einen Fasermaterial (Komponente h)),

0,25 bis 10 Gew.-% an dem mindestens einen Leichtfüllstoff (Komponente i)) und/oder, insbesondere und,

0,5 bis 10 Gew.-% an dem mindestens einen polymeren organischen Bindemittel (Komponente j),

wobei die den wässrigen Beschichtungsstoff bildenden Komponenten sich stets zu 100,0 Gew.-% ergänzen.

In einer besonders bevorzugten Ausgestaltung enthält der erfindungsgemäße Grundierungsbeschichtungsstoff (auch "Grundierungsmasse" genannt)

3 bis 65 Gew.-% an dem mindestens einen Füllstoff und/oder, insbesondere und, Pigment (Komponente a)),

0,1 bis 1 Gew.-% an dem mindestens einen Dispergiermittel (Komponente b)),

1 bis 15 Gew.-% an Alkydharz-Bindemittel auf Basis von Leindotteröl (Feststoffanteil) (Komponente c)),

0,1 bis 4 Gew.-% an dem mindestens einen Additiv (Komponente d)),

12 bis 50 Gew.-% an Wasser (Komponente e)),

0,02 bis 4 Gew.-% an dem mindestens einen Alkylalkoxysilan, Alkylalkoxysiloxan und/oder Alkylsilikonat (Komponente f)),

0,05 bis 6,0 Gew.-% an Wasserglas oder Kieselsol (Komponente g)),

0 bis 2,5 Gew.-% an dem mindestens einen Fasermaterial (Komponente h)),

0 bis 10 Gew.-% an dem mindestens einen Leichtfüllstoff (Komponente i)) und/oder, insbesondere und,

0,5 bis 10 Gew.-% an dem mindestens einen polymeren organischen Bindemittel (Komponente j),

wobei die den wässrigen Beschichtungsstoff bildenden Komponenten sich stets zu 100,0 Gew.-% ergänzen.

Die erfindungsgemäßen wässrigen Beschichtungsstoffe zeichnen sich in einer besonders geeigneten Ausführungsform auch dadurch aus, dass deren VOC-Anteil kleiner 30 g/l, bestimmt nach DIN EN ISO 11890-1 (September 2007), ist.

Die der Erfindung zugrunde liegende Aufgabe wird des Weiteren gelöst durch eine Beschichtung, erhalten oder erhältlich aus dem erfindungsgemäßen Beschichtungsstoff. Bei dieser Beschichtung kann es sich insbesondere um einen Putz, eine Grundierung, eine Spachtelschicht oder um einen Farbanstrich, insbesondere für den Innenbereich, handeln. Es hat sich überraschend gezeigt, dass mit den erfindungsgemäßen Beschichtungsstoffen seidenmatte, matte und sogar stumpfmatte Beschichtungen zugänglich sind, ermittelt gemäß DIN EN ISO 2813 (Februar 2015).

Erfindungsgemäße Beschichtungen weisen vorzugsweise eine Pigment-Volumen-Konzentration Konzentration größer 55 %, bevorzugt größer 60% und besonders bevorzugt im Bereich von 65 bis 88%, auf.

Für die Bestimmung der Pigment-Volumen-Konzentration (PVK) kann Rückgriff genommen werden auf die DIN EN ISO 4618:2015-01. Die Pigment-Volumen-Konzentration der Beschichtungen kann gemäß der folgenden Formel berechnet werden:

$$PVK\,[\%] = \left( \sum V_{Pigmente} + \sum V_{Füllstoffe} / \sum V_{Pigmente} + \sum V_{Füllstoffe} + \sum V_{Bindemittel} \right) \times 100.$$

Im Sinne der Erfindung umfassen "Bindemittel" in der vorangehenden Formel sowohl die organischen wie auch die anorganischen Bindemittel, insbesondere Wasserglas und Kieselsol.

Stellt die Beschichtung eine Grundierung dar, verfügt diese insbesondere über eine Pigment-Volumen-Konzentration größer 55 %, bevorzugt größer 60% und besonders bevorzugt im Bereich von 65 bis 80%. Stellt die Beschichtung einen Farbanstrich dar, verfügt diese insbesondere mit einer Pigment-Volumen-Konzentration größer 60%, bevorzugt größer 70% und besonders bevorzugt im Bereich von 75 bis 88%.

Ferner wird die der Erfindung zugrunde liegende Aufgabe gelöst durch ein Substrat enthaltend eine beschichtbare Oberfläche und auf dieser beschichtbaren Oberfläche die erfindungsgemäße Beschichtung.

Mit den erfindungsgemäßen wässrigen Beschichtungsstoffen sind Putzmassen, Grundierungsmassen, Spachtelmassen und Anstrichfarben zugänglich, wobei Grundierungsmassen und Anstrichfarben bevorzugt sind.

Der vorliegenden Erfindung liegt die überraschende Erkenntnis zugrunde, dass sich durch Verwendung eines Alkydharz-Bindemittels auf Basis von Leindotteröl Putzmassen, Grundierungsmassen, Spachtelmassen, Putze und Anstrichfarben erhalten lassen, die ohne polymere organische Bindemittel auf Basis von Erdöl auskommen. Mit anderen Worten, die erfindungsgemäßen Beschichtungsmassen sind in einer besonders bevorzugten Ausführungsform im Wesentlichen frei, insbesondere frei, von polymeren organischen Bindemitteln. Ein erfindungsgemäßer wässriger Beschichtungsstoff ist im Sinne der Erfindung im Wesentlichen frei von polymeren organischen Bindemitteln, wenn, bezogen auf das Gesamtgewicht des Beschichtung Stoffs, darin weniger als 0,75 Gew.-%, bevorzugt weniger als 0,5 Gew.-% und besonders bevorzugt weniger als 0,25 Gew.-% an polymeren organischen Bindemitteln vorliegen.

Mit den erfindungsgemäßen Beschichtungsmassen lassen sich sowohl Flächen im Innenwie auch im Außenbereich mit Farb-, Grundierungs-, Putz- oder Spachtelmassen versehen.

Von Vorteil ist auch, dass sich die erfindungsgemäßen Beschichtungsstoffe in ihrer Handhabung und Verarbeitbarkeit nicht von herkömmlichen Beschichtungsstoffen unterscheiden. Auch zeichnen sich die erfindungsgemäßen Beschichtungen durch ein akzeptables Eigenschaftsprofil hinsichtlich Nassabrieb und Deckvermögen aus. Mit den mit den erfindungsgemäßen Beschichtungsstoffen erhaltenen Beschichtungen sind zudem regelmäßig keine Einbußen hinsichtlich Weiß- und Gelbindex in Kauf zu nehmen.

Außerdem gelangt man mit den erfindungsgemäßen Alkydharz-Bindemittel-haltigen erfindungsgemäßen Beschichtungsstoffen auch ohne den Einsatz von Sikkativen zu den vorangehend geschilderten vorteilhaften Eigenschaften. Die erfindungsgemäßen Beschichtungsstoffe sind demgemäß in einer bevorzugten Ausführungsform im Wesentlichen frei, insbesondere frei, von Sikkativen. Die erfindungsgemäßen Beschichtungsstoffe sind im Sinne der Erfindung im Wesentlichen frei Sikkativen, wenn diese, bezogen auf deren Gesamtgewicht, weniger als 0,5 Gew.%, bevorzugt weniger als 0,1 Gew.% und besonders bevorzugt weniger als 0,05 Gew.% an Sikkativen enthalten.

Schließlich können die erfindungsgemäßen Beschichtungsstoffe sicher und zuverlässig gelagert und eingesetzt werden, ohne dass sie organische Biozide zu enthalten haben. Die erfindungsgemäßen Beschichtungsstoffe sind demgemäß in einer bevorzugten Ausführungsform im Wesentlichen frei, insbesondere frei, von organischen Topfkonservierungsmitteln, insbesondere organischen Bioziden. Ein erfindungsgemäßer Beschichtungsstoff ist im Sinne der Erfindung auch dann als im Wesentlichen frei von organischen Bioziden anzusehen, wenn für deren Herstellung auf handelsübliche Komponenten zurückgegriffen wird, deren Lieferformen organischen Biozide beinhalten, ohne dass jedoch dem Beschichtungsstoff ein organisches Biozid als Komponente zugesetzt wird. Die erfindungsgemäßen Beschichtungsstoffe sind insbesondere dann als im Wesentlichen frei an organischen Bioziden bzw. organischen Konservierungsmitteln zu betrachten, wenn nach Maßgabe der "Vergabegrundlage für Umweltzeichen" der RAL gGmbH für "Emissionsarme Innenwandfarben DE-UZ 102" (Ausg. Januar 2019, Version 3) keine organischen Biozide oder organischen Konservierungsmittel darin enthalten sind oder, jeweils bezogen auf das individuelle Konservierungsmittel, nicht mehr als 2 ppm (einschließlich Formaldehyd) und in Bezug auf 5-Chloro-2-methyl-4-isothiazolin (CIT) weniger als 0,5 ppm sowie in Bezug auf Methylisothiazolinon (MIT) weniger als 1,5 ppm.

Die erfindungsgemäßen Beschichtungsstoffe, die im Wesentlichen frei, insbesondere frei, von organischen Topfkonservierungsmitteln, insbesondere organischen Bioziden, sind, verfügen in einer bevorzugten Ausführungsform über Calcium-Silikate enthaltend Hydroxidionen, insbesondere Xonotlit, und/oder, insbesondere und, Calciumaluminiumsulfate, insbesondere Ettringit, besonders bevorzugt über Xonotlit und Ettringit.

Die Erfindung wird des Weiteren anhand der nachfolgend aufgeführten Beispielformulierungen wässriger Beschichtungsstoffe erläutert. Diese begrenzen den Gegenstand der Erfindung jedoch keineswegs. Der Fachmann auf dem Gebiet kann, basierend auf der vorliegenden Beschreibung sowie seinem allgemeinen Fachwissen, weitere Ausführungsformen der Erfindung ausarbeiten, ohne erfinderisch tätig werden zu müssen Alle Angaben erfolgen in Gewichtsprozent. Sofern wasser- und/oder lösemittelhaltige Zubereitungen zum Einsatz kamen, bezieht sich die Angabe auf den Festkörperanteil dieser Zubereitung.

A) Erfindungsgemäße wässrige Beschichtungsstoffe

| Komponenten [1] | Anstrichfarbe | Grundierungsmasse | Putzmasse | Dispersionsfarbe |
|---|---|---|---|---|
| Wasser | 39,8 | 34,215 | 25,228 | 40,05 |
| Verdicker | 0,5 | 0,3 | 0,17 | 0,5 |
| Kaliummethylsiliconat | 0,88 | 0,275 | - | 0,88 |
| Additive | 1,0 | 1,675 | 2,277 | 1,0 |
| Dispergiermittel | 0,18 | 0,235 | 0,48 | 0,18 |
| Pigmente | 5 | 1 | 4,25 | 5 |
| Calciumcarbonat | 38 | 39 | 48 | 38 |
| Silikatische Füllstoffe | 8 | 12 | 7,5 | 8 |

(fortgesetzt)

| Komponenten [1] | Anstrichfarbe | Grundierungsmasse | Putzmasse | Dispersionsfarbe |
|---|---|---|---|---|
| Alkydharz-Bindemittel-Emulsion (Feststoffanteil) | 3 | 5,4 | 3 | 1,5 |
| polymeres organisches Bindemittel (Feststoffanteil) | - | 4,5 | 2,715 | 1,25 |
| Kalium-Wasserglas | 3,64 | 1,4 | 0,88[2] | 3,64 |
| Leichtfüllstoff | - | - | 4,5 | - |
| Acryl- und Cellulosefasern | - | - | 1 | - |
| 1) Mengenangaben (Feststoff- bzw., falls nicht fest bei 20 °C, Wirkstoffanteil) in Gew.-%, bezogen auf das jeweilige Gesamtgewicht des Beschichtungsstoffes; 2) Lithium-Wasserglas anstelle von Kalium-Wasserglas. | | | | |

B) Weiß- und Gelbindexmessungen an erfindungsgemäßen Beschichtungen

Mit Hilfe des vorangehend beschriebenen erfindungsgemäßen wässrigen Beschichtungsstoffs in Form einer Anstrichfarbe wurden auf die nachfolgend beschriebene Weise erfindungsgemäße Beschichtungen erstellt und auf die zeitliche Veränderung der Eigenschaften Weißindex und Gelbindex untersucht. Die beiden Messgrößen Weißindex und Gelbindex wurden gemäß ASTM E 313-10 bestimmt.

1) Eine Faserzementplatte wurde mithilfe einer Rolle zweifach mit der vorangehend genannten Anstrichfarbe beschichtet. Insgesamt wurden drei Probenmuster auf derselben Faserzementplatte hergestellt. Nach Trocknung wurde die derart beschichtete Faserzementplatte am Fenster im Innenraum gelagert. Der Gelb- und der Weißindex wurden über den zeitlichen Verlauf ermittelt. Wie die nachfolgende Tabelle zeigt, sind der Gelb- und der Weißindex über eine Bemusterungsdauer von elf Monaten im Wesentlichen unverändert geblieben. Die in der Tabelle wiedergegebenen Werte stellen den Mittelwert der für die drei Probenmuster ermittelten Indexwerte dar.

| | Weißindex (Start) | Gelbindex (Start) | Weißindex (nach 11 Mon.) | Gelbindex (nach 11 Mon.) |
|---|---|---|---|---|
| Anstrichfarbe | 73,31 | 5,66 | 73,67 | 5,42 |

2) Die Anstrichfarbe wurde mit einem 200 $\mu$m Spaltrakel im Wege zweier Probenmuster auf Lenetafolien als Untergrund aufgebracht. Die erhaltenen 200 $\mu$m dicken Beschichtungen wurden für sieben Tage bei 20 °C konditioniert, bevor der Weißindex und der Gelbindex ermittelt wurden (Startwert). Anschließend wurden diese Probenmuster auf ein in einem Behälter befindliches Gestell gesetzt, dessen Boden mit einer 0,1 prozentigen Ammoniaklösung bedeckt war. Die Probenmuster befanden sich nicht in direktem Kontakt mit der Ammoniaklösung. Der Behälter wurde mit einem Deckel verschlossen. Die Probenmuster wurden zur Bestimmung von Weiß- und Gelbindex nach 24 Stunden entnommen. Wie die nachfolgende Tabelle zeigt, sind der Gelb- und der Weißindex über die Bemusterungsdauer im Wesentlichen unverändert geblieben. Die resultierenden Werte lieferten keine ausgeprägte Tendenz zur Dunkelvergilbung. Die in der Tabelle wiedergegebenen Werte stellen den Mittelwert der für die zwei Probenmuster ermittelten Indexwerte dar.

| | Weißindex (Start) | Gelbindex (Start) | Weißindex (nach 24 h) | Gelbindex (nach 24 h) |
|---|---|---|---|---|
| Anstrichfarbe | 74,53 | 5,04 | 72,21 | 5,55 |

3) Die Anstrichfarbe wurde mit einem 200 $\mu$m Spaltrakel im Wege zweier Probenmuster auf Lenetafolien als Untergrund aufgebracht. Die erhaltenen 200 $\mu$m dicken Beschichtungen wurden nach Trocknung unmittelbar an der Innenseite einer Fensterscheibe befestigt. Der Gelb- und der Weißindex wurden über den zeitlichen Verlauf ermittelt. Wie die nachfolgende Tabelle zeigt, sind der Gelb- und der Weißindex über eine Bemusterungsdauer von 2,5 Monaten im Wesentlichen unverändert geblieben. Die in der Tabelle wiedergegebenen Werte stellen den Mittelwert der für die zwei Probenmuster ermittelten Indexwerte dar.

| | Weißindex (Start) | Gelbindex (Start) | Weißindex (nach 2,5 Mon.) | Gelbindex (nach 2,5 Mon.) |
|---|---|---|---|---|
| Anstrichfarbe | 73,79 | 4,47 | 74,40 | 5,43 |

4) Die Anstrichfarbe wurde mit einem 200 μm Spaltrakel im Wege dreier Probenmuster auf Lenetafolien als Untergrund aufgebracht. Die erhaltenen 200 μm dicken Beschichtungen wurden nach Trocknung unmittelbar in einen verschlossenen Schrank gelegt, um die Dunkelvergilbung zu untersuchen. Der Gelb- und der Weißindex wurden über den zeitlichen Verlauf ermittelt. Wie die nachfolgende Tabelle zeigt, sind der Gelb- und der Weißindex über eine Bemusterungsdauer von 11 Monaten im Wesentlichen unverändert geblieben. Die in der Tabelle wiedergegebenen Werte stellen den Mittelwert der für die drei Probenmuster ermittelten Indexwerte dar.

| | Weißindex (Start) | Gelbindex (Start) | Weißindex (nach 11 Mon.) | Gelbindex (nach 11 Mon.) |
|---|---|---|---|---|
| Anstrichfarbe | 74,44 | 4,18 | 70,35 | 5,61 |

C) Bestimmung des Nassabriebs an erfindungsgemäßen Beschichtungen

Für die Ermittlung des Nassabriebs wurde auf die Norm DIN EN ISO 11998:2006-10 in Verbindung mit DIN EN 13300 (November 2002) zurückgegriffen. Für die Beschichtung der erfindungsgemäßen Anstrichfarbe wurde ein gemittelter Nassabrieb von 52 μm ermittelt. Damit gelingt eine Klassifizierung in die Klasse 3. Überraschend wurde gefunden, dass durch die Erhöhung des Wasserglas-Anteils von 3,64 Gew.-% auf 4,20 Gew.-% in der erfindungsgemäßen Anstrichfarbe, unter entsprechender Verringerung des Wasseranteils, der Nassabrieb für die damit erhältlichen Beschichtungen auf 32 μm verringert werden konnte.

Für die Beschichtung der erfindungsgemäßen Anstrichfarbe wurde ferner ein gemittelter Wert von 99,5 % Kontrastlöschung bei einer Ergiebigkeit von 6m$^2$/l für das Deckvermögen ermittelt, bestimmt gemäß DIN EN ISO 6504-3 (April 2020). Hierdurch gelingt eine Einstufung in die Klasse 1.

Außerdem wurden für die Beschichtung der erfindungsgemäßen Anstrichfarbe die nachfolgend genannten Glanzwerte ermittelt, bestimmt gemäß DIN EN ISO 2813 (Februar 2015): Glanz 20°: 1,0; Glanz 60°: 2,2; Glanz 85°: 3,0 (Stumpfmatt).

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

**Patentansprüche**

1.   Wässriger Beschichtungsstoff, insbesondere Putzmasse, Grundierungsmasse, Spachtelmasse oder Anstrichfarbe, bestehend aus oder umfassend, insbesondere umfassend,

   a) mindestens einen Füllstoff und/oder mindestens ein Pigment,
   b) mindestens ein Dispergiermittel,
   c) mindestens ein Alkydharz-Bindemittel, bevorzugt auf Basis von Leindotteröl und/oder Leinöl und besonders bevorzugt auf Basis von Leindotteröl,
   d) mindestens ein Additiv und
   e) Wasser.

2.   Wässriger Beschichtungsstoff nach Anspruch 1, ferner umfassend
   f) mindestens einem Alkylalkoxysilan, Alkylalkoxysiloxan und/oder Alkylsilikonat, wobei wasserlösliche Alkalialkylsilikonate, insbesondere Kaliummethylsiliconat, bevorzugt sind.

3.   Wässriger Beschichtungsstoff nach Anspruch 1 oder 2, ferner umfassend
   g) Wasserglas und/oder Kieselsol, insbesondere Wasserglas.

4.   Wässriger Beschichtungsstoff nach einem der vorangehenden Ansprüche, ferner umfassend
   h) mindestens ein organisches und/oder anorganisches Fasermaterial.

5.   Wässriger Beschichtungsstoff nach einem der vorangehenden Ansprüche, **dadurch gekennzeichnet, dass**

der mindestens eine Füllstoff ausgewählt ist aus der Gruppe bestehend aus nicht gefällten carbonatischen Füllstoffen, gefällten carbonatischen Füllstoffen, insbesondere gefälltes Calciumcarbonat, silikatischen Füllstoffen, insbesondere Calcium-Silikate enthaltend Hydroxidionen, z.B. Xonotlit, synthetischen Füllstoffen, insbesondere Acrylathohlkugeln, sulfatischen Füllstoffen, insbesondere Calciumaluminiumsulfaten, z.B. Ettringit, und beliebigen Mischungen hiervon.

6. Wässriger Beschichtungsstoff nach einem der vorangehenden Ansprüche, ferner umfassend
   i) mindestens einen Leichtfüllstoff.

7. Wässriger Beschichtungsstoff nach einem der vorangehenden Ansprüche, **dadurch gekennzeichnet, dass** das Dispergiermittel Polycarboxylatsalze, bevorzugt Natriumpolycarboxylatsalze, Maleinsäure-Copolymere in Salzform, Maleinsäureanhydrid-Copolymere in Salzform, propoxyliertes Tetrahydroxyalkylethylendiamin und/oder Aminoalkohole, insbesondere ausgewählt aus der Gruppe bestehend aus 2-Amino-2-methyl-1-propanol, 2-Amino-2-ethyl-1,3-propan-diol, N,N,N',N'-Tetrakis(2-hydroxypropyl)-ethylendiamin, Polyhydroxyaminen, insbesondere Polyhydroxyaminen, bei denen die Polyhydroxy-Einheit auf einer Hexose basiert, umfasst oder hieraus besteht.

8. Wässriger Beschichtungsstoff nach einem der vorangehenden Ansprüche, **dadurch gekennzeichnet, dass** das Alkydharz 15 bis 50 Gew.-%, insbesondere 20 bis 43 Gew.-%, einfach ungesättigte Fettsäuren und 40 bis 75 Gew.-%, insbesondere 47 bis 70 Gew.-%, mehrfach ungesättigte Fettsäuren sowie gegebenenfalls 3 bis 15 Gew.-%, insbesondere 6 bis 12 Gew.-%, gesättigte Fettsäuren, jeweils bezogen auf das Gesamtgewicht an gesättigten und ungesättigten Fettsäuren des Alkydharzes, enthält.

9. Wässriger Beschichtungsstoff nach einem der vorangehenden Ansprüche, **dadurch gekennzeichnet, dass** die Alkydharze gebildet sind aus Komponenten, umfassend mehrwertige Alkohole, insbesondere Glycerin, mehrprotonige Säuren, insbesondere Phthalsäure, Phthalsäureanhydrid und/oder Isophthalsäure, und die Fettsäuren des Leindotteröls, insbesondere Leindotteröl, oder die Fettsäuren des Leinöls, insbesondere Leinöl.

10. Wässriger Beschichtungsstoff nach einem der vorangehenden Ansprüche, **dadurch gekennzeichnet, dass** das mindestens eine Additiv Entschäumer, Stabilisatoren, pH-Einstellmittel, Hydrophobierungsmittel, Mattierungsmittel, Netzmittel, Rheologieadditive oder beliebige Mischungen hiervon umfasst.

11. Wässriger Beschichtungsstoff nach einem der vorangehenden Ansprüche, **dadurch gekennzeichnet, dass** das Alkydharz des Alkydharz-Bindemittels ein mittel- oder langöliges Alkydharz, insbesondere ein langöliges Alkydharz, ist.

12. Wässriger Beschichtungsstoff nach einem der vorangehenden Ansprüche, ferner umfassend
    j) mindestens ein polymeres organisches Bindemittel, insbesondere ausgewählt aus der Gruppe bestehend aus Vinylacetat/EthylenCopolymeren, Copolymeren auf Basis von Vinylaromaten, insbesondere gebildet aus Styrol und (Meth)acrylaten, Copolymeren auf Basis von Acrylaten und gegebenenfalls Methacrylaten, insbesondere Reinacrylate, Hybridbindemitteln, insbesondere in Form wässriger Organosilikat-Hybriddispersionen, und beliebigen Mischungen hiervon.

13. Wässriger Beschichtungsstoff nach einem der vorangehenden Ansprüche, enthaltend
    Copolymere auf Basis von Vinylaromaten, insbesondere gebildet aus Styrol und (Meth)acrylaten, als ein polymeres organisches Bindemittel und Wasserglas und/oder Kieselsol, insbesondere Wasserglas, als anorganisches Bindemittel oder Vinylacetat/Ethylen-Copolymere oder Copolymere auf Basis von Acrylaten und gegebenenfalls Methacrylaten, insbesondere Reinacrylate, und kein Wasserglas oder Kieselsol, insbesondere kein Wasserglas und kein Kieselsol.

14. Wässriger Beschichtungsstoff nach einem der vorangehenden Ansprüche, enthaltend

    1 bis 70 Gew.-%, bevorzugt 3 bis 65 Gew.-%, an dem mindestens einen Füllstoff und/oder Pigment (Komponente a)),
    0,05 bis 2,0 Gew.-%, bevorzugt 0,1 bis 1,0 Gew.-%, an dem mindestens einen Dispergiermittel (Komponente b)),
    0,5 bis 20 Gew.-%, bevorzugt 1,0 bis 15 Gew.-%, an Alkydharz-Bindemittel, insbesondere auf Basis von Leindotteröl (Feststoffanteil) (Komponente c)),
    0,01 bis 5,0 Gew.-%, bevorzugt 0,1 bis 4,0 Gew.-%, an dem mindestens einen Additiv (Komponente d)),
    10 bis 60 Gew.-%, bevorzugt 12 bis 50 Gew.-%, an Wasser (Komponente e)),

0 bis 6,0 Gew.-%, bevorzugt 0,02 bis 4,0 Gew.-%, an dem mindestens einen Alkylalkoxysilan, Alkylalkoxysiloxan und/oder Alkylsilikonat (Komponente f)),
0 bis 10,0 Gew.-%, bevorzugt 0,05 bis 6,0 Gew.-%, an Wasserglas und/oder Kieselsol (Komponente g)),
0 bis 7 Gew.-%, bevorzugt 0,1 bis 2,5 Gew.-%, an dem mindestens einen Fasermaterial (Komponente h)),
0 bis 15 Gew.-%, bevorzugt 0,25 bis 10 Gew.-%, an dem mindestens einen Leichtfüllstoff (Komponente i)) und/oder, insbesondere und,
0 bis 15 Gew.-%, bevorzugt 0,5 bis 10 Gew.-%, an dem mindestens einen polymeren organischen Bindemittel (Komponente j)),

wobei die den wässrigen Beschichtungsstoff bildenden Komponenten sich stets zu 100,0 Gew.-% ergänzen.

**15.** Wässriger Beschichtungsstoff nach einem der vorangehenden Ansprüche, **dadurch gekennzeichnet, dass** dieser eine Putzmasse, eine Grundierungsmasse, eine Spachtelmasse oder eine Anstrichfarbe darstellt.

**16.** Wässriger Beschichtungsstoff nach einem der vorangehenden Ansprüche, **dadurch gekennzeichnet, dass** dieser im Wesentlichen frei, insbesondere frei, von organischen Bioziden und/oder im Wesentlichen frei, insbesondere frei, von Sikkativen und/oder im Wesentlichen frei, insbesondere frei, von polymeren organischen Bindemitteln ist.

**17.** Wässriger Beschichtungsstoff nach einem der vorangehenden Ansprüche, enthaltend
Calcium-Silikate enthaltend Hydroxidionen, insbesondere Xonotlit, und/oder, insbesondere und, Calciumaluminiumsulfate, insbesondere Ettringit, und kein Wasserglas oder Kieselsol, insbesondere kein Wasserglas und kein Kieselsol, und/oder, insbesondere und,
enthaltend
Calcium-Silikate enthaltend Hydroxidionen, insbesondere Xonotlit, und/oder, insbesondere und, Calciumaluminiumsulfate, insbesondere Ettringit, und im Wesentlichen keine, insbesondere keine, organischen Biozide.

**18.** Wässriger Beschichtungsstoff nach einem der vorangehenden Ansprüche, **dadurch gekennzeichnet, dass** dieser einen pH-Wert im Bereich von 8,5 bis 12,5, vorzugsweise im Bereich von 9,5 bis 12,0, aufweist oder auf einen pH-Wert im Bereich von 8,5 bis 12,5, vorzugsweise im Bereich von 9,5 bis 12,0, eingestellt ist.

**19.** Beschichtung, erhalten oder erhältlich aus einem Beschichtungsstoff nach einem der Ansprüche 1 bis 18.

**20.** Beschichtung nach Anspruch 19, **dadurch gekennzeichnet, dass** diese eine Grundierung darstellt, insbesondere mit einer Pigment-Volumen-Konzentration größer 55 %, bevorzugt größer 60% und besonders bevorzugt im Bereich von 65 bis 80%, oder dass diese einen Farbanstrich darstellt, insbesondere mit einer Pigment-Volumen-Konzentration größer 60%, bevorzugt größer 70% und besonders bevorzugt im Bereich von 75 bis 88%.

**21.** Substrat enthaltend eine beschichtbare Oberfläche und auf dieser beschichtbaren Oberfläche eine Beschichtung nach Anspruch 19 oder 20.

**22.** Verwendung des wässrigen Beschichtungsstoffs nach einem der Ansprüche 1 bis 18 für die Beschichtung oder Renovierung von Flächen im Innen- und/oder Außenbereich.

**23.** Verwendung nach Anspruch 22, **dadurch gekennzeichnet, dass** der wässrige Beschichtungsstoff eine Putzmasse, Grundierungsmasse, Spachtelmasse oder Anstrichfarbe darstellt, insbesondere eine Grundierungsmasse oder Anstrichfarbe.

**Europäisches Patentamt**
**European Patent Office**
**Office européen des brevets**

# EUROPÄISCHER RECHERCHENBERICHT

Nummer der Anmeldung

EP 21 17 2034

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 498 784 A1 (DAW SE [DE]) 19. Juni 2019 (2019-06-19)<br><br>* Absatz [0001] - Absatz [0002] *<br>* Absatz [0020] - Absatz [0023] *<br>* Absatz [0031] - Absatz [0034] *<br>* Absatz [0044] - Absatz [0045] *<br>* Absatz [0048] - Absatz [0054] *<br>* Absatz [0060]; Beispiele 1, 2 *<br>* Ansprüche 1-15 *<br>----- | 1,2,5,7, 9-12, 14-16, 18-23 | INV. C09D5/02 C09D167/08 |
| X | EP 1 980 595 A2 (MURJAHN AMPHIBOLIN WERKE [DE]) 15. Oktober 2008 (2008-10-15)<br>* Absatz [0001] - Absatz [0005] *<br>* Absatz [0029] - Absatz [0032] *<br>* Absatz [0036] *<br>* Ansprüche 1-29 *<br>----- | 1-23 | |
| X | EP 1 696 010 A1 (MURJAHN AMPHIBOLIN WERKE [DE]) 30. August 2006 (2006-08-30)<br>* Absatz [0001] *<br>* Absatz [0020] *<br>* Absatz [0029] *<br>* Ansprüche 1-18 *<br>----- | 1,14,15, 19,22,23 | |
| X | WO 2018/202616 A1 (AKZO NOBEL COATINGS INT BV [NL]) 8. November 2018 (2018-11-08)<br><br>* Absatz [0018] *<br>* Absatz [0025] *<br>* Ansprüche 1-15 *<br>----- | 1,9,11, 18,19, 21-23 | |
| X | CN 107 987 693 A (UNION FOSHAN CHEMICAL CO LTD; SHAOGUAN UNION CHEMICAL CO LTD) 4. Mai 2018 (2018-05-04)<br>* Ansprüche 1-7 *<br>----- | 1,9,10, 19-23 | |

**RECHERCHIERTE SACHGEBIETE (IPC)**

C09D
C09J

Der vorliegende Recherchenbericht wurde für alle Patentansprüche erstellt

| Recherchenort | Abschlußdatum der Recherche | Prüfer |
|---|---|---|
| München | 29. Oktober 2021 | Siemsen, Beatrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 2034

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-10-2021

| Im Recherchenbericht angeführtes Patentdokument | | Datum der Veröffentlichung | Mitglied(er) der Patentfamilie | | Datum der Veröffentlichung |
|---|---|---|---|---|---|
| EP 3498784 | A1 | 19-06-2019 | EP | 3498784 A1 | 19-06-2019 |
|  |  |  | ES | 2831273 T3 | 08-06-2021 |
| EP 1980595 | A2 | 15-10-2008 | DE | 102007016595 A1 | 09-10-2008 |
|  |  |  | EP | 1980595 A2 | 15-10-2008 |
| EP 1696010 | A1 | 30-08-2006 | DE | 102005008335 A1 | 24-08-2006 |
|  |  |  | EP | 1696010 A1 | 30-08-2006 |
| WO 2018202616 | A1 | 08-11-2018 | AR | 111626 A1 | 31-07-2019 |
|  |  |  | BR | 112019021228 A2 | 28-04-2020 |
|  |  |  | CN | 110545668 A | 06-12-2019 |
|  |  |  | EP | 3618631 A1 | 11-03-2020 |
|  |  |  | RU | 2724547 C1 | 23-06-2020 |
|  |  |  | WO | 2018202616 A1 | 08-11-2018 |
| CN 107987693 | A | 04-05-2018 | KEINE | | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Emissionsarme Innenwandfarben DE-UZ 102. Vergabegrundlage für Umweltzeichen. RAL gGmbH, Januar 2019